Europäisches Patentamt

European Patent Office

Office européen des brevets

(11) Veröffentlichungsnummer: **0 354 364**
**A1**

## (12) EUROPÄISCHE PATENTANMELDUNG

(21) Anmeldenummer: 89112554.4

(22) Anmeldetag: 10.07.89

(51) Int. Cl.⁴: **C09J 157/12 , C08F 220/34 , C08F 226/04**

(30) Priorität: **18.07.88 DE 3824303**

(43) Veröffentlichungstag der Anmeldung:
**14.02.90 Patentblatt 90/07**

(84) Benannte Vertragsstaaten:
**AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Schieferstein, Ludwig, Dr.**
**Am Hang 15**
**D-4030 Ratingen 1(DE)**
Erfinder: **Gierenz, Gerhard, Dr.**
**Dieselstrasse 80**
**D-5760 Solingen(DE)**
Erfinder: **Klauck, Wolfgang, Dr.**
**Gelvenweg 2**
**D-4005 Meerbusch 2(DE)**
Erfinder: **Fischer, Herbert, Dr.**
**Am Nettchesfeld 14**
**D-4000 Düsseldorf 13(DE)**

(54) Verwendung von Aminogruppen enthaltenden Copolymeren in Wässriger Zubereitung als Klebstoffe.

(57) Wäßrige Klebstoffzubereitungen, enthaltend 15 bis 75 Gew.-% Aminogruppen enthaltenden Copolymere, erhalten durch Copolymerisation von

a) 60 bis 90 Gew.-% eines stickstofffreien Monomeren oder mehrerer mit einer olefinischen Doppelbindung und

b) 40 bis 10 Gew.-% eines mindestens eine tertiäre Aminofunktion enthaltenden, linear polymerisierbaren Monomeren oder mehrerer und/oder Diallylamin, wobei die Copolymeren gegebenenfalls vollständig oder teilweise neutralisiert bzw. quarterniert sind, ergeben klare Klebstoffsysteme mit ausgezeichneten Klebeeigenschaften, insbesondere gegenüber Kunststoffen, bei kurzen Abbindezeiten.

EP 0 354 364 A1

## Verwendung von Aminogruppen enthaltenden Copolymeren in wäßriger Zubereitung als Klebstoffe.

Die Erfindung betrifft die Verwendung von Aminogruppen enthaltenden Copolymeren, erhalten durch Copolymerisation von, jeweils bezogen auf Copolymer,

a) 60 bis 90 Gew.-% eines stickstofffreien Monomeren oder mehrerer mit einer olefinischen Doppelbindung und

b) 40 bis 10 Gew.-% eines mindestens eine tertiäre Aminofunktion enthaltenden linear polymerisierbaren Monomeren oder mehrerer und/oder Diallylamin, wobei die Aminogruppen der Copolymeren gegebenenfalls vollständig oder teilweise neutralisiert bzw. quarterniert sind, in wäßriger, klarer Zubereitung als Klebstoffe.

Es sind bereits zahlreiche wasserlösliche Polymere als Bestandteile wäßriger Klebstofflösungen bekannt geworden, z.B. Polyvinylpyrrolidon, Polyvinylalkohol und Polyacrylamid sowie wasserlösliche Celluloseether und Stärkederivate.

Den Vorteilen wäßriger Klebstoffzubereitungen - insbesondere die Nichtbrennbarkeit - stehen erhebliche Nachteile gegenüber. So sind die erhaltenen Klebeverbindungen nicht wasserfest und getrocknete Klebstofffilme werden an feuchter Luft klebrig. Darüber hinaus führen wäßrige Klebstoffzubereitungen im allgemeinen zu einer starken Wellung von zu verklebenen Papier, die auch nach Abtrocknung des Klebstoffs nicht reversibel ist. Schließlich lassen sich mit wäßrigen Klebstoffzubereitungen im allgemeinen Klebefestigkeiten erreichen, die denjenigen von Klebstoffen mit einem Gehalt an organischen Lösemitteln unterlegen sind. Eine dauerhafte Verklebung z.B. von Papier und Kunststoff ist mit den herkömmlichen wäßrigen Klebstoffzubereitungen nicht oder praktisch nicht möglich. Ein weiterer Nachteil wäßriger Klebstoffzubereitungen ist die geringe Abbindegeschwindigkeit.

Die Erfindung ist auf wäßrige Klebstoffzubereitungen gerichtet, die bei kurzer Abbindezeit eine wirksame Verklebung von Papier, Textilien, Leder, Holz, Kunststoffen, Metallen oder ähnlichen Substraten mit sich selbst oder anderen Materialien gestatten. Diese Aufgabe wird erfindungsgemäß durch die Verwendung der eingangs genannten Copolymere gelöst.

Die erfindungsgemäß zu verwendenden, Aminogruppen enthaltenden Copolymere sind als solche als Überzugsmaterial für Tabletten aus der DE-A 2 135 073, auf deren Inhalt Bezug genommen wird, bekannt.

Als erfindungsgemäß einzusetzende stickstofffreie Monomere für die Herstellung der Aminogruppen enthaltenden Copolymere können insbesondere die folgenden genannt werden:

alpha, beta-ungesättigte Mono- und Dicarbonsäuren, insbesondere Acrylsäure, Methacrylsäure, Crotonsäure, Itakonsäure, Maleinsäure und Fumarsäure einschließlich Estern derselben, z.B. Acrylsäurealkylester, Methacrylsäurealkylester, Hydroxyethylacrylat und -methacrylat, beta-Hydroxypropylacrylat und -methacrylat, beta-Hydroxybutylacrylat und -methacrylat, gamma-Hydroxybutylacrylat und -methacrylat, Glycerinmonoacrylat und -methacrylat, Ethylenglykolmonoacrylat und -methacrylat; weiterhin Vinylester, insbesondere Vinylacetat, und Vinylether sowie Styrol (gegebenenfalls in Mischung mit Butadien), alpha-Methylstyrol, Vinyltoluol und dergleichen. Besonders bevorzugte stickstofffreie Monomere sind Ester der Acryl- bzw. Methacrylsäure mit $C_1$-$C_4$-Monoalkanolen, z.B. die Methyl-, Ethyl-, Propyl- und Butylester, gegebenenfalls im Gemisch mit Acryl- und/oder Methacrylsäure. Die vorgenannten Monomeren können einzeln oder in Mischung eingesetzt werden.

Die erfindungsgemäß einzusetzenden, mindestens eine tertiäre Aminofunktion enthaltenden linear polymerisierbaren Monomeren sind dem Polymerfachmann geläufig. Typische Vertreter sind Dialkylaminoalkylester der Acryl-, Methacryl-, Malein-, Itakon- und Fumarsäure sowie Diallylamin. Besonders bevorzugt sind Ester der Acryl- bzw. Methacrylsäure mit insbesondere eine tertiäre Aminofunktion aufweisenden $C_2$-$C_6$-Monoalkanolen wie Dimethylaminoethylacrylat und -methacrylat, Diethylaminoethylacrylat und -methacrylat, Dipropylaminoethylacrylat und -methacrylat, Dibutylaminoethylacrylat und -methacrylat, 2-(Dimethylamino)propylacrylat und -methacrylat, 2-(Diethylamino)butylacrylat und -methacrylat, Dimethylaminoneopentylacrylat und -methacrylat und dergleichen. Die vorgenannten Monomeren können einzeln oder in Mischung eingesetzt werden.

Im Falle kleinerer Gewichtsmengen, z.B. Weniger als 20 Gew.-%, an mindestens eine tertiäre Aminofunktion enthaltenden linear polymerisierbaren Monomeren wird der Fachmann, um klare Zubereitungen zu erhalten, die stickstofffreien Monomeren so auswählen, daß sie mindestens teilweise wasserlöslich sind. Ein mindestens teilweise wasserlösliches Comonomeres ist beispielsweise der Methylester der Acrylsäure (Methylacrylat).

Gemäß einer weiteren vorteilhaften Ausführungsform der Erfindung weisen die Aminogruppen enthaltenden Copolymere Glasübergangstemperaturen (Tg) von -20 bis +30 °C auf. Die Einstellung einer entsprechenden Glasübergangstemperatur durch Auswahl geeigneter Comonomerzusammensetzungen und/oder Polymerisationsbedingungen ist eine dem Polymerfachmann geläufige Maßnahme.

Gemäß einer weiteren vorteilhaften Ausführungsform der Erfindung enthalten die wäßrigen Zubereitungen die Aminogruppen enthaltenden Copolymere in einer Menge von 15 bis 75, insbesondere 25 bis 45 Gew.-%, bezogen auf Gesamtgewicht der Zubereitung.

Ein weiterer Vorteil der erfindungsgemäß zu verwendenden Copolymere ist dadurch begründet, daß die sie enthaltenden wäßrigen Zubereitungen klar sind, d.h. wie klare Lösungen erscheinen, wobei eine geringe Restopaleszenz in Kauf genommen werden kann, und dennoch eine Klebkraft entfalten, die derjenigen üblicher opaker, wäßriger Zubereitungen mindestens gleichkommt. Diese klaren Zubereitungen können erhalten werden, in dem man einer wäßrigen Dispersion der Copolymeren soviel einer Säure zusetzt und dabei die Copolymeren neutralisiert bzw. die Aminogruppen derselben neutralisiert, bis sich gerade eine klare Zubereitung ergibt. Die Menge der hierzu erforderlichen Säure hängt von der Art und der Zusammensetzung des Copolymeren ab. Die klare Phase stellt sich im allgemeinen bereits dann ein, wenn nur ein Teil der Aminofunktionen neutralisiert ist; es ist selbstverständlich jedoch auch möglich, sämtliche Aminofunktionen zu neutralisieren.

Für die Neutralisation eignen sich die üblichen, physiologisch unbedenklichen, anorganischen und/oder organischen Säuren wie Schwefelsäure, Salzsäure, Phosphorsäure, Ameisensäure, Essigsäure und dergleichen. Besonders bevorzugt sind Phosphorsäure, Ameisensäure und/oder Essigsäure.

Anstelle der Neutralisation mit Säuren kann man auch die Aminogruppen der Copolymere zum Erhalt klarer, wäßriger Zubereitungen mit üblichen Alkylierungsmitteln, insbesondere Methyljodid, quarternieren.

Die Erfindung ist weiterhin auf wäßrige Klebstoffzubereitungen gerichtet, die 15 bis 75, insbesondere 25 bis 45 Gew.-%, bezogen auf Klebstoffgesamtgewicht, Aminogruppen enthaltende Copolymere, erhalten durch Copolymerisation, jeweils bezogen auf Copolymere, von

a) 60 bis 90 Gew.-% eines stickstofffreien Monomeren oder mehrerer mit einer olefinischen Doppelbindung und

b) 40 bis 10 Gew.-% eines mindestens eine tertiäre Aminofunktion enthaltenden linear polymerisierbaren Monomeren oder mehrerer und/oder Diallylamin, wobei die Aminogruppen der Copolymeren bis zum Erreichen einer klaren Zubereitung gegebenenfalls vollständig oder teilweise neutralisiert bzw. quarterniert sind.

Bevorzugte Merkmale der wäßrigen Klebstoffzubereitungen der Erfindung sind bereits weiter oben erläutert worden.

Für die Klebstoffzubereitungen der Erfindung kann es erwünscht sein, eine möglichst geringe Viskosität einzustellen. Dem Fachmann stehen hierzu mehrere Möglichkeiten zur Verfügung. So kann man z.B. beim Aufbau der Copolymeren geringe Mengen an Reglern zusetzen. Geeignete Regler sind Thioglykolsäure oder Mercaptoethanol. Der Anteil der Regler sollte 2% nicht übersteigen. In vielen Fällen sind Zusätze von 0,5 oder 0,1 % und manchmal sogar noch geringere Mengen zur Verringerung der Viskosität ausreichend. Es ist lediglich zu beachten, daß erhöhte Mengen an Reglern die Klebkraft beeinträchtigen können; der jeweils günstigste Anteil an Reglern läßt sich jedoch durch den Fachmann durch einfache Versuche ermitteln.

Die wäßrigen Klebstoffzubereitungen der Erfindung können weiterhin übliche Zusätze wie Konservierungsmittel, Farbstoffe, Riechstoffe und dergleichen enthalten.

Die Herstellung der wäßrigen Klebstoffzubereitungen der Erfindung kann mittels an sich bekannter Methoden erfolgen. Es ist lediglich darauf zu achten, daß das Molekulargewicht der Copolymeren 15.000, vorzugsweise 30.000, nicht unterschreitet, da sonst die Klebeeigenschaften beeinträchtigt werden könnten.

Die Herstellung der wäßrigen Klebstoffzubereitungen der Erfindung erfolgt beispielsweise durch Polymerisation in wäßriger Lösung vor oder nach der Zugabe des Neutralisations-oder Quarternierungsmittels. Sollten die Comonomeren der wäßrigen Monomerlösung nicht löslich sein, so kann auch nach Art einer Fällungspolymerisation in einem Nichtlösungsmittel gearbeitet werden; das durch Fällungspolymerisation gewonnene Material kann anschließend in wäßriger Lösung, die das Neutralisations- oder Quarternierungsmittel enthalten kann, gelöst werden. Neutralisations- oder Quarternierungsmittel können bei der Polymerisation in wäßriger Lösung von Anfang an zugegeben sein, sie können jedoch auch erst zum Ende der Polymerisation zugegeben werden.

Bei einem hohen Gehalt an nicht wasserlöslichen Comonomeren kann darüber hinaus auch eine Emulsionspolymerisation durchgeführt werden, wobei dann anschließend durch Neutralisation bzw. Quarternierung die wäßrigen Klebstoffzubereitungen hergestellt werden. Bei der Emulsionspolymerisation kann es zweckmäßig sein, Substanzen zuzusetzen, die zu einer Verringerung der Viskosität führen. Im übrigen können auch Molekulargewichtsregler zugegeben werden, um ein zu hohes Molekulargewicht, z.B. von mehr als 1.000.000, zu verhindern.

Die Klebstoffzubereitungen der Erfindung können zum Verkleben von Holz, Papier, Kunststoffen, Textilien, Leder und/oder Metallen mit sich selbst oder miteinander eingesetzt werden.

Die Erfindung wird im folgenden anhand bevorzugter Ausführungsbeispiele näher erläutert.

Beispiel 1.

Es wurde eine wäßrige Klebstoffzubereitung mit einem Copolymer, bestehend aus 35 Gew.-% Dimethylaminoethylmethacrylat (DMAEM), 25 Gew.-% Methylmethacrylat (MMA), 20 Gew.-% Butylacrylat (BUA) und 20 Gew.-% Ethylacrylat (EA) (Glasübergangstemperatur: ca. 0° C), gemäß der folgenden Rezeptur hergestellt:

| Vorlagelösung. | |
|---|---|
| 21,4 Gew.-Teile | Wasser |
| 0,1 Gew.-Teile | Katalysator (2,2'-Azobis(2-amidinopropan)-dihydrochlorid) |
| Zulauflösung 1. | |
| 9,5 Gew.-Teile | Dimethylaminoethylmethacrylat |
| 6,8 Gew.-Teile | Methylmethacrylat |
| 5,4 Gew.-Teile | Butylacrylat |
| 5,4 Gew.-Teile | Ethylacrylat |
| Zulauflösung 2. | |
| 0,13 Gew.-Teile | Katalysator (wie oben) |
| 3,7 Gew.-Teile | Wasser |
| Verdünnungslösung. | |
| 21,4 Gew.-Teile | Wasser |
| Neutralisationslösung. | |
| 23,1 Gew.-Teile | Wasser |
| 1 Gew.-Teil | Ameisensäure, 85%-ig |
| 2,1 Gew.-Teile | Phosphorsäure, 85%-ig |
| ca. 100 Gew.-Teile | ca. 30%-ige wässrige Polymerlösung. |

Die Herstellung erfolgte in einem Reaktionsgefäß mit Rührer, Heizung, Kühlung, Rückflußkühler, Temperaturmessung und zwei Zulaufgefäßen. Dabei wurde zunächst im Reaktionsgefäß die Vorlagelösung aus Wasser und Katalysator hergestellt. Die Zulauflösungen 1 bzw. 2 wurden in die getrennten Zulaufgefäße gegeben. Die Vorlagelösung wurde unter Rühren auf 80° C erwärmt. Anschließend wurden beide Zulauflösungen innerhalb von 180 min parallel zugegeben, wobei die Temperatur bis 86° C anstieg. Nach beendetem Zulauf wurde das Reaktionsgemisch 60 min bei 80° C gerührt. Die Dispersion wurde anschließend mit Wasser verdünnt und mit der Neutralisationslösung in eine klare Zubereitung überführt (Neutralisationsgrad: 65%).

Das Reaktionsprodukt wurde in Form einer fast klaren bis leicht opaken, schwach gelblichen Lösung und einer Brookfield-Viskosität von mehr als 6000 mPas(Spindel 5, 20Upm) erhalten; der Trockenrückstand betrug 29,5 ± 0,5%.

Bei der Ermittlung der Klebeeigenschaften wurden die folgenden Ergebnisse erhalten:

Papierabbindung an Chrompapier nach 60 $\mu$m dickem Auftrag: 0,3 min

Klebefestigkeiten (in N/mm²)

Holz/Holz 6,5

Holz/Aluminium 4,5

Holz/ABS 4,0

Papierwellen nach Auftrag: deutlich

Papierwellen nach Trocknung: deutlich aber geringer als im nassen Zustand.

Der Klebstoff war feuchtklimabeständig.

4

Beispiele 2 und 3.

In der in Beispiel 1 beschriebenen Weise wurden wäßrige Klebstoffzubereitungen mit den im folgenden angegebenen Zusammensetzungen der Copolymeren hergestellt:

35 Gew.-% Dimethylaminoethylmethacrylat, 29 Gew.-% Butylacrylat, 36 Gew.-% Ethylmethacrylat (Tg: ca. 0°C).

30 Gew.-% Dimethylaminoethylmethacrylat, 60 Gew.-% Ethylacrylat, 10 Gew.-% Methacrylsäure (Tg: ca. -5°C).

Auch diese Klebstoffzubereitungen ergaben feuchtklimabeständige Verklebungen.

**Ansprüche**

1. Verwendung von Aminogruppen enthaltenden Copolymeren, erhalten durch Copolymerisation von, jeweils bezogen auf Copolymer,

a) 60 bis 90 Gew.-% eines stickstofffreien Monomeren oder mehrerer mit einer olefinischen Doppelbindung und

b) 40 bis 10 Gew.-% eines mindestens eine tertiäre Aminofunktion enthaltenden, linear polymerisierbaren Monomeren oder mehrerer und/oder Diallylamin,

wobei die Aminogruppen der Copolymeren gegebenenfalls vollständig oder teilweise neutralisiert bzw. quarterniert sind, in wäßriger, klarer Zubereitung als Klebstoffe.

2. Verwendung nach Anspruch 1, dadurch gekennzeichnet, daß die stickstofffreien Monomere Ester der Acryl- bzw. Methacrylsäure mit $C_1$-$C_4$-Monoalkanolen, gegebenenfalls im Gemisch mit Acryl- und/oder Methacrylsäure, sind.

3. Verwendung nach Anspruch 1 oder 2, dadurch gekennzeichnet, daß die Aminogruppen enthaltenden Monomere Ester der Acryl- bzw. Methacrylsäure mit tertiäre Aminofunktionen aufweisenden $C_2$-$C_6$-Mono-alkanolen sind.

4. Verwendung nach mindestens einem der Ansprüche 1 bis 3, dadurch gekennzeichnet, daß die Aminogruppen enthaltenden Copolymeren Glasübergangstemperaturen von -20°C bis +30°C aufweisen.

5. Verwendung nach mindestens einem der Ansprüche 1 bis 4, dadurch gekennzeichnet, daß die wäßrigen Zubereitungen die Aminogruppen enthaltenden Copolymere in einer Menge von 15 bis 75, insbesondere 25 bis 45 Gew.-%, bezogen auf Gesamtgewicht der Zubereitung, enthalten.

6. Verwendung nach mindestens einem der Ansprüche 1 bis 4, dadurch gekennzeichnet, daß die Aminogruppen der Copolymere bis zum Erreichen einer klaren Zubereitung in Wasser neutralisiert bzw. quarterniert sind.

7. Wäßrige Klebstoffzubereitungen, enthaltend 15 bis 75, insbesondere 25 bis 45 Gew.-%, bezogen auf Klebstoffgesamtgewicht Aminogruppen enthaltenden Copolymere, erhalten durch Copolymerisation von, jeweils bezogen auf Copolymer,

a) 60 bis 90 Gew.-% eines stickstofffreien Monomeren oder mehrerer mit einer olefinischen Doppelbindung und

b) 40 bis 10 Gew.-% eines mindestens eine tertiäre Aminofunktion enthaltenden, linear polymerisierbaren Monomeren oder mehrerer und/oder Diallylamin,

wobei die Copolymeren bis zum Erreichen einer klaren Zubereitung neutralisiert bzw. quarterniert sind.

8. Wäßrige Klebstoffzubereitung nach Anspruch 7, dadurch gekennzeichnet, daß die stickstofffreien Monomeren Ester der Acryl- bzw. Methacrylsäure mit $C_1$-$C_4$-Monoalkanolen, gegebenenfalls im Gemisch mit Acryl- und/oder Methacrylsäure, sind.

9. Wäßrige Klebstoffzubereitung nach Anspruch 7 oder 8, dadurch gekennzeichnet, daß die Aminogruppen enthaltenden Monomere Ester der Acryl- bzw. Methacrylsäure mit tertiäre Aminofunktionen aufweisenden $C_2$-$C_6$-Monoalkanolen sind.

10. Wäßrige Klebstoffzubereitung nach mindestens einem der Ansprüche 7 bis 9, dadurch gekennzeichnet, daß die Aminogruppen enthaltenden Copolymeren Glasübergangstemperaturen von -20°C bis +30°C aufweisen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 411 378 (JOHNSON + JOHNSON) <br> * Seite 4, Tabelle; Beispiele 6-9,16-20 * <br><br> --- | 1 | C 09 J 157/12 <br> C 08 F 220/34 <br> C 08 F 226/04 |
| X | US-A-3 032 539 (SCHULLER + PRICE) <br> * Spalte 9, Zeilen 58-61 * <br> --- | 1 | |
| X | WPI, FILE SUPPLIER, Nr. AN=77-29854Y, Derwent Publications Ltd, London, GB; & JP-A-52 033 926 (NITTO ELECTRIC CO.) 15-03-1977 <br> * Zusammenfassung * <br> ----- | 1 | |

**RECHERCHIERTE SACHGEBIETE (Int. Cl.5)**

C 09 J
C 08 L
C 08 F

Der vorliegende Recherchenbericht wurde für alle Patentansprüche erstellt

| Recherchenort | Abschlußdatum der Recherche | Prüfer |
|---|---|---|
| DEN HAAG | 27-09-1989 | SCHUELER D.H.H. |

EPO FORM 1503 03.82 (P0403)